# EUROPEAN PATENT APPLICATION

(11) **EP 4 746 506 A1**
(43) Date of publication of application: **20.05.2026**
(21) Application number: 23944738.6
(22) Date of filing: 13.07.2023
(51) Int. Cl.: H04W 28/06

(54) **COMMUNICATION METHOD, COMMUNICATION DEVICE AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/107245
(87) International publication number: WO 2025/010721

(57) **Abstract**

The embodiments of the present disclosure relate to a communication method, a communication device and a communication system. The communication method comprises: a sending end determining a first radio frame, wherein the first radio frame comprises first identification information, and the first identification information identifies whether the sending end supports out-of-order transmission of data frames; and sending a first data frame. Whether the sending end supports the out-of-order transmission of data frames is identified by means of the first identification information in the first radio frame, such that a receiving end can acquire information about whether the sending end can support the out-of-order transmission of data frames, that is, the sending end can preferentially transmit service data having a relatively high priority (for example, low-latency service data with a relatively large sequence number), and thus when the receiving end determines that both the receiving end itself and the sending end support the out-of-order transmission of data frames, the receiving end can preferentially transmit, with the sending end, the service data having a relatively high priority, thereby reducing the transmission delay.

## Description

### TECHNICAL FIELD

The present disclosure relates to the field of communication technology, and in particular to a communication method, a communication device, and a communication system.

### BACKGROUND

Currently, researches in Wi-Fi technology focus on areas such as Ultra High Reliability (UHR), with the vision of improving the reliability of Wireless Local Area Networks (WLAN) connections, reducing latency, improving manageability, increasing throughput at different Signal-to-Noise Ratio (SNR) levels, and reducing the device-level power consumption.

In UHR, for further reducing the transmission latency of low-latency services, it is necessary to prioritize the transmission of low-latency service data. Therefore, it is necessary to further enhance the transmission mechanism of low-latency services to ensure the latency requirements of low-latency services.

### SUMMARY

The present disclosure provides a communication method, a communication device, and a communication system to further reduce the transmission latency of low-latency services.

In a first aspect, embodiments of the present disclosure provide a communication method, including: determining, by a transmitting terminal, a first wireless frame, where the first wireless frame includes first indication information, and the first indication information indicates whether the transmitting terminal supports out-of-order delivery of data frames; and transmitting the first data frame.

In a second aspect, embodiments of the present disclosure provide a communication method, including: receiving, by a receiving terminal, a first wireless frame, where the first wireless frame includes first indication information, and the first indication information indicates whether the transmitting terminal supports out-of-order delivery of data frames.

In a third aspect, embodiments of the present disclosure further provide a communication device. The communication device is a transmitting terminal, and includes: a determining module, configured to determine a first wireless frame, where the first wireless frame includes first indication information, and the first indication information indicates whether the transmitting terminal supports out-of-order delivery of data frames; and a transmitting module, configured to transmit the first wireless frame.

In a fourth aspect, embodiments of the present disclosure further provide a communication device. The communication device is a receiving terminal, and includes: a receiving module configured to receive a first wireless frame, where the first wireless frame includes first indication information, and the first indication information indicates whether the transmitting terminal supports out-of-order delivery of data frames.

In a fifth aspect, embodiments of the present disclosure further provide a communication device, including: one or more processors, where the communication device is configured to perform an example implementation of the first aspect.

In a sixth aspect, embodiments of the present disclosure further provide a communication device, including: one or more processors, where the communication device is configured to perform an example implementation of the second aspect.

In a seventh aspect, embodiments of the present disclosure further provide a communication system, including a first communication device and a second communication device. The first communication device is a transmitting terminal configured to perform an example implementation of the first aspect, and the second communication device is a receiving terminal configured to perform an example implementation of the second aspect.

In an eighth aspect, embodiments of the present disclosure further provide a storage medium having instructions stored therein. When the instructions are executed on the communication device, the communication device is caused to perform example implementations of the first, second, third, and fourth aspects.

In the embodiments of the present disclosure, the transmitting terminal determines the first wireless frame, and the first indication information in the first wireless frame indicates whether the transmitting terminal supports out-of-order delivery of data frames. This allows the receiving terminal to acquire information about whether the transmitting terminal supports out-of-order delivery of data frames. That is, the transmitting terminal can prioritize transmitting higher-priority service data (e.g., low-latency service data with larger sequence numbers). Therefore, when the receiving terminal determines that both the receiving terminal itself and the transmitting terminal support out-of-order delivery of data frames, the receiving terminal can prioritize transmitting higher-priority service data with the transmitting terminal, reducing transmission latency.

Additional aspects and advantages of the embodiments of the present disclosure will be set forth in part in the following description, and will be obvious from the following description, or may be learned by practice of the present disclosure.

### BRIEF DESCRIPTION OF THE DRAWINGS

To more clearly illustrate the technical solutions in the embodiments of the present disclosure, the accompanying drawings required for describing the embodiments are introduced below. These drawings are merely some embodiments of the present disclosure, and do not impose specific limitations on the protection scope of the present disclosure.
Fig. 1 is an example schematic diagram about the architecture of a communication system provided by an embodiment of the present disclosure;
Fig. 2 is an interactive schematic diagram of a communication method provided by an embodiment of the present disclosure;
Fig. 3 is a flowchart schematic diagram of a communication method provided by an embodiment of the present disclosure;
Fig. 4A is another flowchart schematic diagram of a communication method provided by an embodiment of the present disclosure;
Fig. 4B is another flowchart schematic diagram of a communication method provided by an embodiment of the present disclosure;
Fig. 5A is another interactive schematic diagram of a communication method provided by an embodiment of the present disclosure;
Fig. 5B is another interactive schematic diagram of a communication method provided by an embodiment of the present disclosure;
Fig. 6 is a structural schematic diagram of a communication device provided by an embodiment of the present disclosure;
Fig. 7 is a structural schematic diagram of a communication device provided by an embodiment of the present disclosure;
Fig. 8 is a structural schematic diagram of a terminal provided by an embodiment of the present disclosure;
Fig. 9 is a structural schematic diagram of a chip provided by an embodiment of the present disclosure.

### DETAILED DESCRIPTION OF THE EMBODIMENTS

The embodiments of the present disclosure provide a communication method, a communication device, and a communication system.

In a first aspect, the embodiments of the present disclosure provide a communication method, including: determining, by a transmitting terminal, a first wireless frame, where the first wireless frame includes first indication information, and the first indication information indicates whether the transmitting terminal supports out-of-order delivery of data frames; and transmitting the first data frame.

In the above embodiments, the transmitting terminal determines the first wireless frame, and the first indication information in the first wireless frame indicates whether the transmitting terminal supports out-of-order delivery of data frames. This enables the receiving terminal to acquire information about whether the transmitting terminal supports out-of-order delivery of data frames. That is, the transmitting terminal can prioritize transmitting higher-priority service data (e.g., low-latency service data with larger sequence numbers). Therefore, when the receiving terminal determines that both the receiving terminal itself and the transmitting terminal support out-of-order delivery of data frames, the receiving terminal can prioritize transmitting higher-priority service data with the transmitting terminal, reducing transmission latency.

In conjunction with some embodiments of the first aspect, in some implementations, the first indication information is carried in the Media Access Control (MAC) capabilities field of the Ultra-High Reliability (UHR) capabilities information element of the first wireless frame.

In the above embodiments, the first indication information that indicates whether the transmitting terminal supports out-of-order delivery of data frames can be effectively carried in the first wireless frame, facilitating effective parsing of the first wireless frame by the receiving terminal.

In conjunction with some embodiments of the first aspect, in some implementations, the first indication information is set to a first parameter value, indicating that the transmitting terminal supports out-of-order delivery of data frames.

In the above embodiments, by quantifying the first indication information, when the first indication information is set to the first parameter value, it indicates that the transmitting terminal supports out-of-order delivery of data frames. This helps to reduce the amount of transmission data required by the first wireless frame during transmission.

In conjunction with some embodiments of the first aspect, in some implementations, a second wireless frame is received. The second wireless frame includes second indication information, and the second indication information indicates whether the receiving terminal supports out-of-order delivery of data frames.

In the above embodiments, the second wireless frame sent by the receiving terminal is received. The second indication information in the second wireless frame indicates whether the receiving terminal supports out-of-order delivery of data frames. This allows the transmitting terminal to acquire information about whether the receiving terminal supports out-of-order delivery of data frames. That is, the receiving terminal can prioritize transmitting higher-priority service data (e.g., low-latency service data with larger sequence numbers). Therefore, when the transmitting terminal determines that both the transmitting terminal and the receiving terminal support out-of-order delivery of data frames, the transmitting terminal can prioritize transmitting higher-priority service data with the receiving terminal, reducing transmission latency.

In conjunction with some embodiments of the first aspect, in some implementations, the second indication information is carried in the MAC capabilities field of the UHR capabilities information element of the second wireless frame.

In the above embodiments, the first indication information that indicates whether the receiving terminal supports out-of-order delivery of data frames can be effectively carried in the second wireless frame, facilitating effective parsing of the second wireless frame by the transmitting terminal.

In conjunction with some embodiments of the first aspect, in some implementations, the second indication information is set to a second parameter value, indicating that the receiving terminal supports out-of-order delivery of data frames.

In the above embodiments, by quantifying the second indication information, when the second indication information is set to the second parameter value, it indicates that the transmitting terminal supports out-of-order delivery of data frames. This helps to reduce the amount of transmission data required by the second wireless frame during transmission.

In conjunction with some embodiments of the first aspect, in some implementations, the first indication information indicates that the transmitting terminal supports out-of-order delivery of data frames, the second indication information indicates that the receiving terminal supports out-of-order delivery of data frames, and the first data frame is determined. The first data frame includes third indication information, and the third indication information indicates the range of packet number (PN) values of the first data frame;
The first data frame is then transmitted.

In the above embodiments, the third indication information in the first data frame indicates the range of PN values of the first data frame. This facilitates the receiving terminal of the first data frame to determine whether the transmission of the currently-received first data frame is a valid out-of-order delivery based on the range of PN values and the PN value of the previously-received first data frame.

In conjunction with some embodiments of the first aspect, in some implementations, the third indication information is carried in the MAC header of the first data frame.

In the above embodiments, the third indication information is carried in the MAC header of the first data frame. This facilitates the receiving terminal of the first data frame to determine whether the transmission of the currently-received first data frame is a valid out-of-order delivery based on the third indication information.

In conjunction with some embodiments of the first aspect, in some implementations, the PN value corresponds to a preset traffic identifier (TID).

In the above embodiments, by mapping the PN value to the TID, the receiving terminal of the first data frame can easily acquire the service type, to which the first data frame belongs, based on the PN value of the first data frame.

In conjunction with some embodiments of the first aspect, in some implementations, the first wireless frame includes at least one of: a probe request frame, an association request frame, or a reassociation request frame;
The second wireless frame includes at least one of: a beacon frame, a probe response frame, an association response frame, or a reassociation response frame.

In the above embodiments, when the transmitting terminal of the first wireless frame is a STA and the receiving terminal of the first wireless frame is an AP, the first wireless frame is set to include at least one of: a probe request frame, an association request frame, or a reassociation request frame; and the second wireless frame is set to include at least one of: a beacon frame, a probe response frame, an association response frame, or a reassociation response frame. This allows indicating whether the transmitting terminal supports out-of-order delivery of data frames by the first wireless frame during the process of establishing an association between the transmitting terminal and the receiving terminal of the first wireless frame, or during the process of issuing or acquiring network information between the transmitting terminal and the receiving terminal of the first wireless frame.

In a second aspect, embodiments of the present disclosure provide a communication method, including: receiving, by a receiving terminal, a first wireless frame, where the first wireless frame includes first indication information, and the first indication information indicates whether the transmitting terminal supports out-of-order delivery of data frames.

In the above embodiments, by using the first indication information in the first wireless frame to indicate whether the transmitting terminal supports out-of-order delivery of data frames, the receiving terminal is enabled to acquire information about whether the transmitting terminal supports out-of-order delivery of data frames. That is, the transmitting terminal can prioritize transmitting higher-priority service data (e.g., low-latency service data with larger sequence numbers). Therefore, when the receiving terminal determines that both the receiving terminal itself and the transmitting terminal support out-of-order delivery of data frames, the receiving terminal can prioritize transmitting higher-priority service data with the transmitting terminal, reducing transmission latency.

In conjunction with some embodiments of the second aspect, in some implementations, the first indication information is carried in the MAC capabilities field of the UHR capabilities information element of the first wireless frame.

In conjunction with some embodiments of the second aspect, in some implementations, the first indication information is set to a first parameter value, indicating that the transmitting terminal supports out-of-order delivery of data frames.

In conjunction with some embodiments of the second aspect, in some implementations, the receiving terminal determines a second wireless frame. The second wireless frame includes second indication information, and the second indication information indicates whether the receiving terminal supports out-of-order delivery of data frames. Then, the second wireless frame is transmitted.

In the above embodiments, the receiving terminal determines the second wireless frame and the second indication information in the second wireless frame indicates whether the transmitting terminal supports out-of-order delivery of data frames. This enables the transmitting terminal to acquire information about whether the receiving terminal supports out-of-order delivery of data frames. That is, the receiving terminal can prioritize transmitting higher-priority service data (e.g., low-latency service data with larger sequence numbers). Therefore, when the transmitting terminal determines that both the transmitting terminal and the receiving terminal support out-of-order delivery of data frames, the transmitting terminal can prioritize transmitting higher-priority service data with the receiving terminal, reducing transmission latency.

In conjunction with some embodiments of the second aspect, in some implementations, the second indication information is carried in the MAC capabilities field of the UHR capabilities information element of the second wireless frame.

In conjunction with some embodiments of the second aspect, in some implementations, the second indication information is set to a second parameter value, indicating that the receiving terminal supports out-of-order delivery of data frames.

In conjunction with some embodiments of the second aspect, in some implementations, the first indication information indicates that the transmitting terminal supports out-of-order delivery of data frames, and the second indication information indicates that the receiving terminal supports out-of-order delivery of data frames. The receiving terminal receives the first data frame. The first data frame includes the third indication information, and the third indication information indicates the range of packet number (PN) values of the first data frame.

Based on the range of PN values, the initial PN value of the first data frame, and the PN value of the first data frame, it is determined whether the transmission of the first data frame is a valid out-of-order delivery.

In the above embodiments, the receiving terminal can identify the range of PN values of the first data frame by the third indication information in the first data frame. This facilitates the receiving terminal of the first data frame in determining whether the transmission of the currently-received first data frame is a valid out-of-order delivery based on the range of PN values and the PN value of the previously-received first data frame.

In conjunction with some embodiments of the second aspect, in some implementations, determining whether the transmission of the first data frame is a valid out-of-order delivery includes:
if the difference between the PN value of the first data frame and the initial PN value is less than or equal to the range of PN values, and the PN value of the first data frame is not progressively increasing relative to the initial PN value, determining that the transmission of the first data frame is a valid out-of-order delivery;
if the difference between the PN value of the first data frame and the initial PN value is greater than the range of PN values, determining that the transmission of the first data frame is an invalid out-of-order delivery.

In the above embodiments, the receiving terminal can determine whether the transmission of the first data frame is a valid out-of-order delivery, by determining the relationship of the difference between the PN value of the first data frame and the initial PN value with respect to the range of PN values indicated by the third indication information, and determining whether the PN value of the first data frame is progressively increasing relative to the initial PN value.

In conjunction with some embodiments of the second aspect, in some implementations, the third indication information is carried in the MAC header of the first data frame.

In conjunction with some embodiments of the second aspect, in some implementations, the PN value corresponds to a preset traffic identifier (TID).

In conjunction with some embodiments of the second aspect, in some implementations, the first wireless frame includes at least one of: a probe request frame, an association request frame, or a reassociation request frame.

The second wireless frame includes at least one of: a beacon frame, a probe response frame, an association response frame, or a reassociation response frame.

In a third aspect, embodiments of the present disclosure also provide a communication device, which is a transmitting terminal, including at least one of a determining module or a transmitting module. The communication device is configured to perform an example implementation of the first aspect.

In a fourth aspect, embodiments of the present disclosure also provide a communication device, which is a receiving terminal, including at least one of a receiving module. The communication device is configured to perform an example implementation of the second aspect.

In a fifth aspect, embodiments of the present disclosure also provide a communication device, including: one or more processors.

The communication device is configured to perform an example implementation of the first aspect.

In the sixth aspect, embodiments of the present disclosure also provide a communication device, including: one or more processors.

The communication device is configured to perform an example implementation of the second aspect.

In the seventh aspect, embodiments of the present disclosure also provide a communication system, including a first communication device and a second communication device. The first communication device is a transmitting terminal configured to perform an example implementation of the first aspect, and the second communication device is a receiving terminal configured to perform an example implementation of the second aspect.

In the eighth aspect, embodiments of the present disclosure also provide a storage medium having instructions stored therein. When the instructions are executed on the communication device, the communication device is caused to perform example implementations of the first, second, third, and fourth aspects.

In the ninth aspect, embodiments of the present disclosure provide a program product. When the program product is executed by a communication device, the communication device is caused to perform the methods described in the example implementations of the first, second, third, and fourth aspects.

In the tenth aspect, embodiments of the present disclosure provide a computer program. When the computer program is executed on a computer, the computer is caused to perform the methods described in the example implementations of the first, second, third, and fourth aspects.

In the eleventh aspect, embodiments of the present disclosure provide a chip or chip system. The chip or chip system includes a processing circuit, configured to perform the methods described in the example implementations of the first, second, third, and fourth aspects above.

It is understood that the aforementioned transmitting terminal, receiving terminal, communication system, storage medium, program product, computer program, chip, or chip system are all used to perform the communication methods provided in the embodiments of the present disclosure. Therefore, the beneficial effects achievable may be referred to in the beneficial effects of the corresponding methods, and will not be repeated here.

The embodiments of the present disclosure provide a communication method, a transmitting terminal, a receiving terminal, and a communication system. In some embodiments, the term "communication method" may be used interchangeably with the terms "signal transmission method", "wireless frame transmission method", etc., and the terms "information processing system" and "communication system" etc. may be used interchangeably.

The embodiments of the present disclosure are not exhaustive, but merely illustrative of some embodiments, and are not intended to limit the specific protection scope of the present disclosure. Unless otherwise specified, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. Furthermore, the example implementation methods in a particular embodiment may be arbitrarily combined. Moreover, the embodiments may be arbitrarily combined. For example, some or all steps of different embodiments may be arbitrarily combined, and a particular embodiment may be arbitrarily combined with example implementation methods of other embodiments.

In each embodiment of the present disclosure, unless otherwise specified or logically conflicting, the terminology and/or descriptions are consistent between the embodiments and may be mutually referenced. Technical features in different embodiments may be combined to form new embodiments according to their inherent logical relationships.

The terminology used in the embodiments of the present disclosure is only for the purpose of describing specific embodiments and is not intended to limit the present disclosure.

In the embodiments of the present disclosure, "a plurality of" refers to two or more.

In some embodiments, "at least one of", "one or more", "a plurality of" and "multiple" may be used interchangeably.

In some embodiments, the notation "at least one of A or B", "A and/or B", "A in one case, B in another case", and "in response to one case A, in response to another case B", etc., may include the following technical solutions depending on the situations: in some embodiments, A (executed independently of B); in some embodiments, B (executed independently of A); in some embodiments, selectively executed from A and B (A and B are selectively executed); in some embodiments, A and B (both A and B are executed). The same applies when there are more branches such as A, B, C, etc.

In some embodiments, the notation "A or B", etc., may include the following technical solutions depending on the situations: in some embodiments, A (executed independently of B); in some embodiments, B (executed independently of A); in some embodiments, selectively executed from A and B (A and B are selectively executed). The same applies when there are more branches such as A, B, C, etc.

The prefixes such as "first," "second," etc., in the embodiments of the present disclosure are merely used for distinguishing different described objects and do not constitute restrictions on the position, order, priority, number, or content of the described objects. For the description of the described objects, references may be made to the description in the claims or the context of the embodiments. The use of prefixes should not constitute unnecessary restrictions. For example, if the described object is a "field", then the ordinal numbers before "field" in the "first field" and the "second field" do not restrict the position or order between the "fields". "First" and "second" neither restrict whether the "fields" they modify are in the same message, nor restrict the order of the "first field" and the "second field". As another example, if the described object is a "level," then the ordinal numbers preceding "level" in the "first level" and the "second level" do not restrict the priority between the "levels". Similarly, the number of the described objects is not limited by ordinal numbers, and may be one or more. For example, in the "first device", the number of "devices" may be one or more. Furthermore, objects modified by different prefixes may be the same or different. For instance, if the object is described as "device," then the "first device" and the "second device" may be the same device or different devices, and their types may be the same or different. Similarly, if the object is described as "information", then the "first information" and the "second information" may be the same information or different information, and their contents may be the same or different.

In some embodiments, "including A", "containing A", "for indicating A", and "carrying A" may be interpreted as directly carrying A or indirectly indicating A.

In some embodiments, the terms such as "in response to", "in response to determining", "in the case of", "when", "if", "assuming", etc., may be used interchangeably.

In some embodiments, the terms such as "greater than", "greater than or equal to", "not smaller than", "more than", "more than or equal to", "not less than", "above", "higher than or equal to", "not lower than", "above", etc., may be used interchangeably, and the terms such as "less than", "less than or equal to", "not greater than", "smaller than", " smaller than or equal to", "not more than", "lower than", "lower than or equal to", "not higher than", "below", etc., may be used interchangeably.

In some embodiments, apparatus and devices may be interpreted as physical or virtual, and their names are not limited to the names described in the embodiments. In some cases, they may also be understood as "equipment", "device", "circuit", "network element", "node", "function", "unit", "section", "system", "network", "chip", "chip system", "entity", "body", and etc.

In some embodiments, "network" may be interpreted as devices included in the network, such as access network device and core network device.

In some embodiments, the acquisition of data, information, etc., may comply with the laws and regulations of the country where the location is situated.

In some embodiments, data, information, etc., may be acquired after obtaining user consent.

Furthermore, each element, each row, or each column in the tables according to the embodiments of the present disclosure may be implemented as an independent embodiment, and the combination of any element, any row, or any column may also be implemented as an independent embodiment.

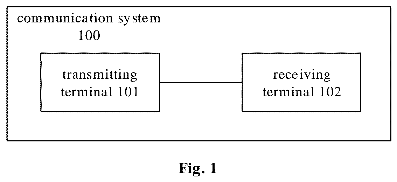

Fig. 1 is a schematic diagram about the architecture of a communication system shown according to an embodiment of the present disclosure.

As shown in Fig. 1, the communication system 100 includes a transmitting terminal 101 and a receiving terminal 102 for data transmission.

In some embodiments, the transmitting terminal and the receiving terminal may be determined according to actual needs. For example, if the data transmission occurs between a station (STA) and an access point (AP), the transmitting device may be the STA, and the respective receiving device may be the AP; or, the transmitting device may be the AP, and the respective receiving device may be the STA.

The STA may include, for example, a wireless communication chip, a wireless sensor, or a wireless communication terminal that supports WiFi communication capabilities. For example, the wireless communication terminal may be at least one of, but is not limited to, mobile phones, wearable devices, IoT devices supporting WiFi communication capabilities, cars with WiFi communication capabilities, smart cars, tablets (Pad), computers with wireless transceiving capabilities, virtual reality (VR) terminal devices, augmented reality (AR) terminal devices, wireless terminal devices in industrial control, wireless terminal devices in self-driving, wireless terminal devices in remote medical surgery, wireless terminal devices in smart grids, wireless terminal devices in transportation safety, wireless terminal devices in smart cities, or wireless terminal devices in smart homes.

Specifically, the STA may be a terminal device or network device with a wireless fidelity (WiFi) chip. For example, the STA may support multiple WLAN standards such as 802.11ax, 802.11be, 802.11ac, 802.11n, 802.11g, 802.11b, and 802.11a, as well as the next-generation 802.11 protocol, but is not limited thereto.

In some embodiments, the AP may be an access point for mobile terminals to access a wired network. The AP acts as a bridge connecting wired and wireless networks, the main function of which is to connect various wireless network clients together and then connect the wireless network to the Ethernet. Specifically, the AP may be a terminal device or network device with a Wi-Fi chip. For example, the AP may support multiple WLAN standards such as 802.11ax, 802.11be, 802.11ac, 802.11n, 802.11g, 802.11b, and 802.11a, as well as the next-generation 802.11 protocol, but is not limited thereto.

For example, in the embodiments of the present disclosure, the AP and STA may be devices supporting multiple links. For example, they may be represented as an Access Point Multi-Link Device (AP MLD) and a Non-Access Point Multi-Link Device (Non-AP MLD), respectively. The AP MLD may represent an access point supporting multi-link communication functions, and the non-AP MLD may represent a station supporting multi-link communication functions.

It is understood that the communication system described in the embodiments of the present disclosure is for the purpose of more clearly illustrating the technical solutions in the embodiments of the present disclosure, and does not constitute a limitation on the technical solutions provided in the embodiments of the present disclosure. Those skilled in the art will recognize that with the evolution of system architecture and the emergence of new service scenarios, the technical solutions provided in the embodiments of the present disclosure are also applicable to similar technical problems.

The following embodiments of the present disclosure may be applied to the communication system 100 shown in Fig. 1, or some of its entities, but are not limited thereto. The entities shown in Fig. 1 are illustrative. A communication system may include all or some of the entities in Fig. 1, or other entities not shown in Fig. 1. The number and form of each entity are arbitrary. Each entity may be physical or virtual. The connection relationships between the entities are illustrative. Entities may be unconnected or connected, and the connection may be in any form, including direct or indirect connections, wired or wireless connections.

The embodiments of the present disclosure may be applied to Wireless Local Area Networks (WLANs), such as LANs using the 802.11 series of protocols. In WLANs, the Basic Service Set (BSS) is a fundamental component for a WLAN. The BSS network consists of site devices with some association therebetween within a specific coverage area. One type of association is that sites communicate directly with each other in an ad hoc network, which is called an Independent Basic Service Set (IBSS). Another more common scenario is that in a BSS network, there is only one central station dedicated to managing the BSS, which is called the Access Point (AP), and other stations in the BSS network that are not APs may be called terminals, also known as non-AP STAs. APs and non-AP STAs are collectively referred to as STAs. When describing STAs, there is no need to distinguish between APs and non-AP STAs. Within the same BSS network, due to distance, transmission power, etc., one STA cannot detect other STAs that are far away, and both of them are hidden nodes of each other.

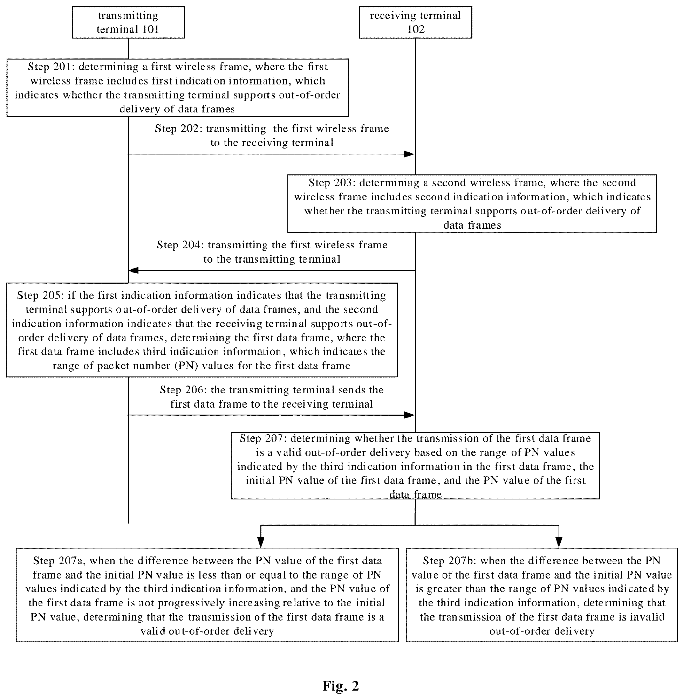

Fig. 2 is an interactive schematic diagram of a communication method shown according to an embodiment of the present disclosure. As shown in Fig. 2, the method may include steps 201, 202, 203, 204, 205, 206 and 207.

Step 201: the transmitting terminal determines a first wireless frame, where the first wireless frame includes first indication information, which indicates whether the transmitting terminal supports out-of-order delivery of data frames.

In some embodiments, the first wireless frame may be transmitted between STAs and APs. The transmitting terminal and the receiving terminal of the first wireless frame may be determined according to actual needs. For example, the transmitting terminal of the first wireless frame may be a STA, and the respective receiving terminal of the first wireless frame is an AP. Alternatively, the transmitting terminal of the first wireless frame may also be an AP, and the respective receiving terminal of the first wireless frame is a STA.

In UHR, the AP may also be a device supporting multi-link communication (e.g., STR or NSTR), i.e., an AP MLD, and the STA may also be attached to a non-AP MLD, supporting multi-link communication, and establishing multi-link communication between the two according to the existing 802.11be architecture.

In some embodiments, when the transmitting terminal of the first wireless frame is a STA and the receiving terminal of the first wireless frame is an AP, the first wireless frame includes at least one of: a probe request frame, an association request frame, or a reassociation request frame. That is, during the association establishment process between the transmitting terminal and the receiving terminal of the first wireless frame, the first wireless frame may be used to indicate whether the transmitting terminal supports out-of-order delivery of data frames.

When the transmitting terminal of the first wireless frame is an AP and the receiving terminal of the first wireless frame is a STA, the first wireless frame includes at least one of: a beacon frame, a probe response frame, an association response frame, or a reassociation response frame. In other words, during the process of issuing or acquiring network information between the transmitting terminal and the receiving terminal of the first wireless frame, the first wireless frame may be used to indicate whether the transmitting terminal supports out-of-order delivery of data frames.

For example, in the embodiments of the present disclosure, the first wireless frame may be used to indicate whether the transmitting terminal supports out-of-order delivery of data frames, after the initial association is established between the transmitting terminal and the receiving terminal of the first wireless frame. Alternatively, the first wireless frame may be used to indicate whether the transmitting terminal supports out-of-order delivery of data frames, before the initial association is established between the transmitting terminal and the receiving terminal of the first wireless frame.

During transmission of the data frame, both the transmitting terminal and the receiving terminal of the data frame support in-order delivery. The transmitting terminal of the data frame typically uses a sequence number (SN) value to indicate the data frame of each transmission, and the SN value assigned to the data frame to be transmitted increases progressively. That is, the difference between the SN values of the data frames of two adjacent transmissions is a preset increment tolerance, and the data frames are transmitted sequentially according to the magnitude of their SN values. For example, with the preset increment tolerance of 1, the SN values assigned to the transmitted data frames may be 1, 2, 3, 4, ..., and the data frames are delivered sequentially in this order. With the preset increment tolerance of 2, the SN values assigned to the transmitted data frames may be 1, 3, 5, 7, ..., and the data frames are delivered sequentially in this order.

Accordingly, the receiving terminal can determine whether the currently-received data frame has been repeatedly transmitted, i.e., determine the validity of the currently-received data frame, based on the delivery order with the progressively increasing SN value. For example, if the transmitting terminal assigned SN=1 to the previously-transmitted data frame and SN=2 to the currently-transmitted data frame, the receiving terminal receives the data frame with SN=2 after receiving the data frame with SN=1. Besides, by comparing the current SN value (i.e., 2) with the initial SN value (i.e., 1), it can be determined that the current SN value is progressively increasing relative to the initial SN value. This helps to confirm that the currently-received data frame is valid and that the transmission mode of the data frames is in-order delivery.

However, when transmitting service data with the same Traffic Identifier (TID) in this transmission mode of the data frames, the service data may be divided into different data frames, and different SNs may be assigned to different data frames before transmission of the service data. Furthermore, in UHR, low-latency service data needs to be transmitted. When the service data is low-latency service data, in order to ensure the low latency in transmitting the low-latency service, it may be necessary to transmit a low-latency service data frame assigned with a larger SN value first, and then transmit a non-low-latency service data frame assigned with a smaller SN value. Clearly, the above data frame transmission mode is not feasible. To address this, the communication method provided by the embodiments of the present disclosure may be used to redefine the data frame transmission mode at both transmission terminals (transmitting and receiving terminals), defining that the transmission terminals can support out-of-order delivery of data frames. This means that the transmission terminals can transmit data frames in a delivery order without following the progressive increase of SN values.

For example, if the last transmitted data frame at the transmitting terminal has the SN of 3, and the currently-transmitted data frame has the SN of 8, the SN values are not progressively increasing. If the receiving terminal first receives a data frame with SN=3, and then receives a data frame with SN=8, it may compare the current SN value (i.e., 8) with the initial SN value (i.e., 3) to determine that the current SN value is not progressively increasing relative to the initial SN value. This confirms that the currently-received data frame is valid and that the transmission mode of the data frames is out-of-order delivery.

In some embodiments, the first indication information is carried in the Media Access Control (MAC) capabilities field of the Ultra-High Reliability (UHR) capabilitiesinformation element of the first wireless frame.

In some embodiments, the first indication information is set to a first parameter value, indicating that the transmitting terminal supports out-of-order delivery of data frames.

The first indication information may be set to "0" or "1", indicating whether the transmitting terminal supports out-of-order delivery of data frames. For example, the first parameter value may be set to "1", which means that when the first indication information is set to "1", it indicates that the transmitting terminal supports out-of-order delivery of data frames; when the first indication information is set to "0", it indicates that the transmitting terminal does not support out-of-order delivery of data frames.

Step 202: the transmitting terminal sends the first wireless frame to the receiving terminal.

For example, as described above, after the initial association is established between the transmitting and receiving terminals of the first wireless frame, the first wireless frame may be used to indicate whether the transmitting terminal supports out-of-order delivery of data frames. Alternatively, the first wireless frame may be used to indicate whether the transmitting terminal supports out-of-order delivery of data frames, before the initial association is established between the transmitting and receiving terminals of the first wireless frame. Therefore, the time for transmitting the first wireless frame to the receiving terminal may be determined based on the actual transmission process.

In the embodiments of the present disclosure, the transmitting terminal determines the first wireless frame, and the first indication information in the first wireless frame indicates whether the transmitting terminal supports out-of-order delivery of data frames. This enables the receiving terminal to acquire information about whether the transmitting terminal supports out-of-order delivery of data frames. Therefore, when it is determined that both the receiving terminal and the transmitting terminal support out-of-order delivery of data frames, higher-priority service data (e.g., low-latency service data with larger sequence numbers) can be transmitted first, reducing transmission latency.

Step 203: the receiving terminal determines a second wireless frame, where the second wireless frame includes second indication information, which indicates whether the receiving terminal supports out-of-order delivery of data frames.

The receiving terminal of the first wireless frame is also the transmitting terminal of the second wireless frame, and the transmitting terminal of the first wireless frame is also the receiving terminal of the second wireless frame. Referring to the preceding description, if the transmitting terminal of the first wireless frame is STA and the receiving terminal of the first wireless frame is AP, then the transmitting terminal of the second wireless frame is AP, and the receiving terminal of the second wireless frame is STA. If the transmitting terminal of the first wireless frame is AP and the receiving terminal of the first wireless frame is STA, then the transmitting terminal of the second wireless frame is STA, and the receiving terminal of the second wireless frame is AP.

In the embodiments of the present disclosure, when the transmitting terminal of the second wireless frame is AP and the receiving terminal of the second wireless frame is STA, the second wireless frame includes at least one of: a beacon frame, a probe response frame, an association response frame, or a reassociation response frame. That is, during the process of issuing or acquiring network information between the transmitting terminal and the receiving terminal of the second wireless frame, the second wireless frame may be used to indicate whether the receiving terminal supports out-of-order delivery of data frames.

When the transmitting terminal of the second wireless frame is STA and the receiving terminal of the second wireless frame is AP, the second wireless frame includes at least one of: a probe request frame, an association request frame, or a reassociation request frame. That is, during the association establishment process between the transmitting terminal and the receiving terminal of the second wireless frame, the second wireless frame may be used to indicate whether the receiving terminal supports out-of-order delivery of data frames.

In some embodiments, the second indication information is carried in the MAC capabilities field of the UHR capabilities information element of the first wireless frame.

In some embodiments, the second indication information is set to a second parameter value, indicating that the receiving terminal supports out-of-order delivery of data frames.

The second parameter value may be the same as the first parameter value. Referring to the description of the first parameter value above, the second indication information may also be set to "0" or "1" to indicate whether the receiving terminal supports out-of-order delivery of data frames. For example, the second parameter value may also be set to "1". That is, when the second indication information is set to "1", it indicates that the receiving terminal supports out-of-order delivery of data frames. When the second indication information is set to "0", it indicates that the receiving terminal does not support out-of-order delivery of data frames.

Step 204: the receiving terminal sends the second wireless frame to the transmitting terminal.

For example, as described above, after the initial association is established between the transmitting terminal and the receiving terminal of the first wireless frame (i.e., the receiving terminal and the transmitting terminal of the second wireless frame), the second wireless frame may be used to indicate whether the receiving terminal supports out-of-order delivery of data frames. Alternatively, the second wireless frame may be used to indicate whether the receiving terminal supports out-of-order delivery of data frames, before the initial association is established between the transmitting terminal and the receiving terminal of the first wireless frame (i.e., the transmitting terminal and the receiving terminal of the second wireless frame). Therefore, the transmission time of the second wireless frame may be determined based on the actual transmission process.

In the embodiments of the present disclosure, the transmission terminal (transmitting terminal and receiving terminal) of the data frame sends, to the peer terminal, information about whether the transmission terminal itself supports out-of-order delivery of data frames. This enables the transmitting terminal to acquire information about whether the transmission terminal itself and the peer terminal support out-of-order delivery of data frames. Therefore, when it is determined that both the transmission terminal itself and the peer terminal support out-of-order delivery of data frames, higher-priority service data (e.g., low-latency service data with larger sequence numbers) can be prioritized for transmission during the data transmission process with the peer terminal, reducing transmission latency.

To prevent replay attacks during data frame transmission, a packet number (PN) may be defined. During data frame transmission, the receiving terminal may compare the PN value of the currently-received data frame with the PN value of the previously-received data frame (i.e., the initial PN value). If the difference between the current PN value and the initial PN value is greater than 1, it is determined that the currently-received data frame is not subject to a replay attack. If the current PN value is less than or equal to the initial PN value, or if the difference between the current PN value and the initial PN value is relatively large, it is determined that the currently-received data frame is subject to a replay attack.

Step 205: if the first indication information indicates that the transmitting terminal supports out-of-order delivery of data frames, and the second indication information indicates that the receiving terminal supports out-of-order delivery of data frames, the transmitting terminal determines the first data frame. The first data frame includes third indication information, which indicates the range of packet number (PN) values of the first data frame.

The first indication information indicates that the transmitting terminal supports out-of-order delivery of data frames, and the second indication information indicates that the receiving terminal supports out-of-order delivery of data frames. That is, the first indication information is set to a first parameter value, and the second indication information is set to a second parameter value.

For example, the range of PN values may be negotiated between the transmitting and receiving terminals to define the range of differences between the PN values for data frames of two adjacent transmissions during data frame transmission between the transmitting and receiving terminals, that is, the range of differences between the initial PN value of the previously-transmitted first data frame and the PN value of the currently-transmitted first data frame. In the embodiments of the present disclosure, the range of PN values of the first data frame may also be referred to as the PN window value.

In the embodiments of the present disclosure, the range of PN values of the first data frame is indicated by the third indication information in the first data frame. This facilitates the receiving terminal of the first data frame to determine whether the transmission of the currently-received first data frame is a valid out-of-order delivery based on the range of PN values and the PN value for the previously-received first data frame.

In some embodiments, the third indication information is carried in the MAC header of the first data frame.

In the embodiments of the present disclosure, by carrying the third indication information in the MAC header of the first data frame, the receiving terminal of the first data frame is facilitated to determine whether the transmission of the currently-received first data frame is a valid out-of-order delivery based on the third indication information.

In some embodiments, the PN value corresponds to a preset traffic identifier (TID).

The TID is used to identify the service type to which the transmitted data frame belongs. For example, the service type may include, but is not limited to, low-latency services. Specifically, it may include video (VI), voice (VO), best-effort (BE), and background (BK) services.

For example, the PN value may be mapped to one or more TIDs. For example, when it is set that PN=1, the corresponding TID is a low-latency service.

In the embodiments of the present disclosure, by mapping the PN value to the TID, the receiving terminal of the first data frame is facilitated to easily obtain the service type to which the first data frame belongs based on the PN value of the first data frame.

Step 206: the transmitting terminal sends the first data frame to the receiving terminal.

Step 207: the receiving terminal determines whether the transmission of the first data frame is a valid out-of-order delivery based on the range of PN values indicated by the third indication information in the first data frame, the initial PN value of the first data frame, and the PN value of the first data frame.

The initial PN value of the first data frame is the PN value of the first data frame which is previously received by the receiving terminal.

In the embodiments of the present disclosure, the receiving terminal may buffer the received first data frame and the initial PN value of the first data frame. Upon receiving a new first data frame, it is determined whether the difference between the PN value of the first data frame and the initial PN value of the first data frame is within the range of PN values. If the difference between the PN value of the first data frame and the initial PN value of the first data frame is within the range of PN values, it may be further determined whether the PN value of the first data frame is progressively increasing relative to the initial PN value of the first data frame. If the difference between the PN value of the first data frame and the initial PN value of the first data frame is within the range of PN values, and the PN value of the first data frame is progressively increasing relative to the initial PN value of the first data frame, it may be determined that the transmission of the first data frame is a valid out-of-order delivery. Otherwise, it may be determined that the transmission is an invalid out-of-order delivery.

In some embodiments, in step 207a, when the difference between the PN value of the first data frame and the initial PN value is less than or equal to the range of PN values indicated by the third indication information, and the PN value of the first data frame is not progressively increasing relative to the initial PN value, the receiving terminal determines that the transmission of the first data frame is a valid out-of-order delivery.

Step 207b: when the difference between the PN value of the first data frame and the initial PN value is greater than the range of PN values indicated by the third indication information, the receiving terminal determines that the transmission of the first data frame is invalid out-of-order delivery.

The PN value of the first data frame is not progressively increasing relative to the initial PN value. That is, the difference between the PN value of the first data frame and the initial PN value is greater than a preset increment tolerance. For example, if the preset increment tolerance is 1, and the progressively increasing order of the PN values is 1, 2, 3, 4, ..., then the difference between the PN value of the first data frame and the initial PN value is greater than 1, and the PN value of the first data frame is not progressively increasing relative to the initial PN value. If the preset increment tolerance is 2, and the progressively increasing order of the PN values is 1, 3, 5, 7, ..., then the difference between the PN value of the first data frame and the initial PN value is greater than 2, and the PN value of the first data frame is not progressively increasing relative to the initial PN value.

Assuming that the initial PN value of the first data frame is PN1, the PN value of the first data frame is PN2, the range of PN values is Δ PN, and the preset increment tolerance is 1. Then, if PN2-PN1 ≤ Δ PN and PN2-PN1 > 1, it may be determined that the transmission of the first data frame is a valid out-of-order delivery. For example, when PN1=3, PN2=8, and Δ PN=32, it may be determined that PN2-PN1 ≤ Δ PN and PN2-PN1 > 1, thus confirming that the transmission of the first data frame is a valid out-of-order delivery.

It shall be noted that in the embodiments of the present disclosure, the receiving terminal may buffer the received first data frame and the initial PN value of the first data frame, and determine the selectable range of PN values of the next received first data frame based on the initial PN value of the first data frame and the range of PN values. That is, (initial PN value + preset incremental tolerance) < PN value of the next received first data frame ≤ (initial PN value + range of PN values). After receiving a new first data frame, it is determined whether the PN value of the first data frame is within the selectable range of PN values of the first data frame. After determining that the PN value of the first data frame is within the selectable range of PN values of the first data frame, it may be further determined whether the PN value of the first data frame is progressively increasing relative to the initial PN value of the first data frame. If it is determined that the PN value of the first data frame is within the selectable range of PN values of the first data frame, and the PN value of the first data frame is progressively increasing relative to the initial PN value of the first data frame, it may be determined that the transmission of the first data frame is a valid out-of-order delivery. Otherwise, it may be determined that the transmission of the first data frame is an invalid out-of-order delivery.

Assuming that the initial PN value of the first data frame is PN1, the PN value of the first data frame is PN2, the range of PN values is ΔPN, and the preset increment tolerance is 1, then the selectable range of PN values of the next received first data frame may be determined as (PN1+2) < PN2' < (PN1+ΔPN). If PN2 is within this selectable range, and PN2-PN1 > 1, it may be determined that the transmission of the first data frame is a valid out-of-order delivery. For example, when PN1=3 and ΔPN=32, it may be determined that 3 < PN2' < 35. If PN2=8, it may be determined that 3 < 8 < 35, and PN2-PN1 > 1, thus confirming that the transmission of the first data frame is valid out-of-order delivery.

For example, if PN2-PN1 > ΔPN, it may be determined that the transmission of the first data frame is an invalid out-of-order delivery, and it may also be determined that the first data frame is subject to a replay attack.

In the embodiments of the present disclosure, by determining the relationship of the difference between the PN value of the first data frame and the initial PN value relative to the range of PN values indicated by the third indication information, and by determining whether the PN value of the first data frame is progressively increasing relative to the initial PN value, it is facilitated to determine whether the transmission of the first data frame is a valid out-of-order delivery.

In some embodiments, the names of information, etc., are not limited to those described in the embodiments. Terms such as "information", "message", "signal", "signaling", "report", "configuration", "indication", "instruction", "command", "channel", "parameter", "domain", "field", "symbol", "code element", "codebook", "codeword", "codepoint", "bit", "data", "program", and "chip" may be used interchangeably.

In some embodiments, terms such as "moment", "point in time", "time", and "time location" may be used interchangeably, and terms such as "duration", "segment", "time window", "window", and "time" may be used interchangeably.

In some embodiments, terms such as "resource block (RB)", "physical resource block (PRB)", "sub-carrier group (SCG)", "resource element group (REG)", "PRB pair", "RB pair", "resource element (RE)", and "sub-carrier" may be used interchangeably.

In some embodiments, terms such as "wireless access scheme" and "waveform" may be used interchangeably.

In some embodiments, terms such as "certain", "preset", "default", "set", "indicated", "specific", "any", and "first" may be used interchangeably. "Certain A", "preset A", "default A", "set A", "indicated A", "specific A", "any A", and "first A" may be interpreted as A pre-defined in a protocol, etc., or may be interpreted as A obtained through setting, configuration, or indication, etc., or may be interpreted as specific A, certain A, any A, or first A, etc., but are not limited thereto.

In some embodiments, determination or judgment may be performed using a value represented by 1 bit (0 or 1), or using a true/false value (Boolean value) represented by true or false, or using numerical comparison (e.g., comparison with a predetermined value), but are not limited thereto.

In some embodiments, "not expecting reception" may be interpreted as not receiving on time-domain resources and/or frequency-domain resources, or may be interpreted as not performing subsequent processing on data, etc., after receiving data, etc.; and "not expecting transmission" may be interpreted as not transmitting, or may be interpreted as transmitting but not expecting a response from the receiver with respect to the transmitted content.

The communication method involved in the embodiments of the present disclosure may include the foregoing steps and at least one of the embodiments. For example, step 202 may be implemented as a separate embodiment, step 203 may be implemented as a separate embodiment, step 205 may be implemented as a separate embodiment, and step 207 may be implemented as a separate embodiment. The combination of steps 201 and 202 may be implemented as a separate embodiment, the combination of steps 203 and 204 may be implemented as a separate embodiment, the combination of steps 205 and 206 may be implemented as a separate embodiment, the combination of steps 201, 202, 203, and 204 may be implemented as a separate embodiment, and the combination of steps 205, 206, and 207 may be implemented as a separate embodiment, but is not limited thereto.

The embodiments of the present disclosure do not restrict the execution order of the combined step of steps 201 and 202, and the combined step of steps 203 and 204. The combined step of steps 201 and 202 may be executed first by the transmitting terminal, and then the combined step of steps 203 and 204 may be executed by the receiving terminal. Alternatively, the combined step of steps 203 and 204 may be executed first by the receiving terminal, and then the combined step of steps 201 and 202 may be executed by the transmitting terminal.

In some embodiments, references may be made to other example implementations recited before or after the description corresponding to Fig. 2.

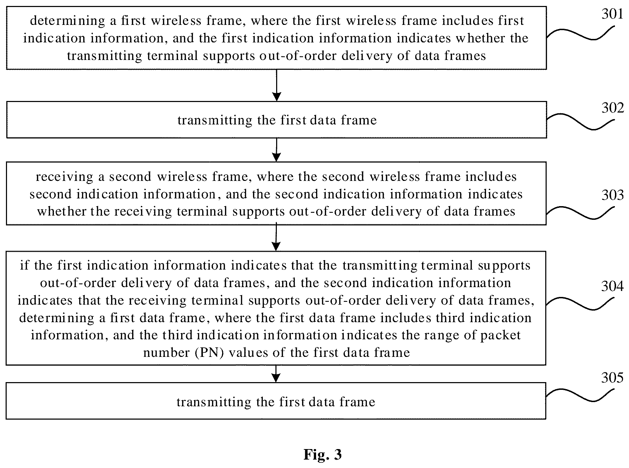

Fig. 3 is a flowchart schematic diagram of a communication method according to an embodiment of the present disclosure.

As shown in Fig. 3, the above method may be applied to a communication device, which is a transmitting terminal. The method includes steps 301, 302, 303, 304, and 305.

Step 301, determining a first wireless frame. The first wireless frame includes first indication information, and the first indication information indicates whether the transmitting terminal supports out-of-order delivery of data frames.

For example, the first wireless frame includes at least one of: a probe request frame, an association request frame, or a reassociation request frame.

For example, the first indication information is carried in the MAC capabilities field of the UHR capabilities information element of the first wireless frame.

For example, the first indication information is set to a first parameter value, indicating that the transmitting terminal supports out-of-order delivery of data frames.

Example implementations of step 301 may be found with reference to the example implementations of step 201 in Fig. 2, and other related parts in the embodiments involved in Fig. 2, which will not be repeated here.

Step 302, transmitting the first data frame.

Example implementations of step 302 may be found with reference to the example implementations of step 202 in Fig. 2, and other related parts in the embodiments involved in Fig. 2, and will not be repeated here.

Step 303: receiving a second wireless frame. The second wireless frame includes second indication information, and the indication indicates whether the receiving terminal supports out-of-order delivery of data frames.

For example, the second wireless frame includes at least one of: a beacon frame, a probe response frame, an association response frame, or a reassociation response frame.

For example, the second indication information is carried in the MAC capabilities field of the UHR capabilities information element of the second wireless frame.

For example, the second indication information is set to a second parameter value, indicating that the receiving terminal supports out-of-order delivery of data frames.

Example implementations of step 303 may be found with reference to the example implementations of step 204 in Fig. 2, and other related parts in the embodiments involved in Fig. 2, and will not be repeated here.

Step 304: if the first indication information indicates that the transmitting terminal supports out-of-order delivery of data frames, and the second indication information indicates that the receiving terminal supports out-of-order delivery of data frames, determining a first data frame. The first data frame includes third indication information, and the third indication information indicates the range of packet number (PN) values of the first data frame.

For example, the third indication information is carried in the MAC header of the first data frame.

For example, the PN value corresponds to a preset traffic identifier (TID).

Example implementations of step 304 may be found with reference to the example implementations of step 205 in Fig. 2, and other related parts in the embodiments involved in Fig. 2, and will not be repeated here.

Step 305: transmitting the first data frame.

Example implementations of step 304 may be found with reference to the example implementations of step 206 in Fig. 2, and other related parts in the embodiments involved in Fig. 2, and will not be repeated here.

The communication method involved in the embodiments of the present disclosure may include the foregoing steps and at least one of the embodiments. For example, step 301 may be implemented as a separate embodiment, step 303 may be implemented as a separate embodiment, and step 304 may be implemented as a separate embodiment. The combination of steps 301 and 302 may be implemented as a separate embodiment, the combination of steps 301, 302, and 303 may be implemented as a separate embodiment, and the combination of steps 304 and 305 may be implemented as a separate embodiment, but is not limited thereto.

In some embodiments, references may be made to other example implementations recited before or after the description corresponding to Fig. 3.

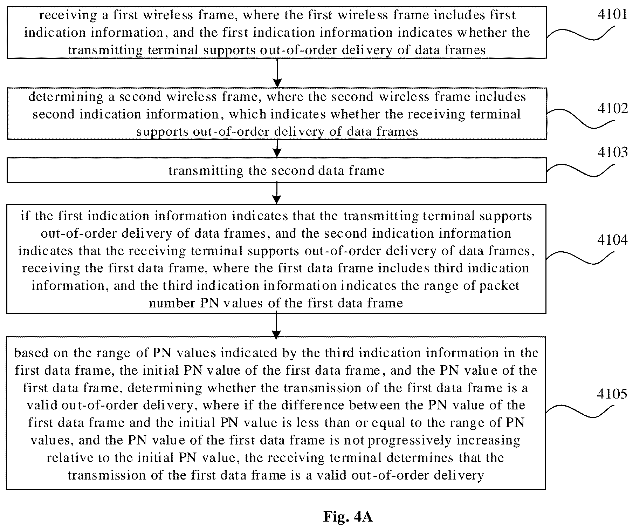

Fig. 4A is another flowchart schematic diagram of a communication method according to an embodiment of the present disclosure.

As shown in Fig. 4A, the above method may be applied to a communication device, which is a receiving terminal. The method includes steps 4101, 4102, 4103, 4104, and 4105.

Step 4101, receiving a first wireless frame. The first wireless frame includes first indication information, and the first indication information indicates whether the transmitting terminal supports out-of-order delivery of data frames.

For example, the first wireless frame includes at least one of: a probe request frame, an association request frame, or a reassociation request frame.

For example, the first indication information is carried in the MAC capabilities field of the UHR capabilities information element of the first wireless frame.

For example, the first indication information is set to a first parameter value, indicating that the transmitting terminal supports out-of-order delivery of data frames.

Example implementations of step 4101 may be found with reference to the example implementations of steps 201 and 202 in Fig. 2, the example implementations of steps 301 and 302 in Fig. 3, the embodiments involved in Fig. 2, and other related parts in the embodiments involved in Fig. 3, which will not be repeated here.

Step 4102: determining a second wireless frame. The second wireless frame includes second indication information, which indicates whether the receiving terminal supports out-of-order delivery of data frames.

For example, the second wireless frame includes at least one of: a beacon frame, a probe response frame, an association response frame, or a reassociation response frame.

For example, the second indication information is carried in the MAC capabilities field of the UHR capabilities information element of the second wireless frame.

For example, the second indication information is set to a second parameter value, indicating that the receiving terminal supports out-of-order delivery of data frames.

Example implementations of step 4102 may be found with reference to the example implementations of step 203 in Fig. 2 and other related parts of the embodiments involved in Fig. 2, and will not be repeated here.

Step 4103: transmitting the second data frame.

Example implementations of step 4103 may be found with reference to the example implementations of step 204 in Fig. 2, the example implementations of step 303 in Fig. 3, the embodiments involved in Fig. 2, and other related parts of the embodiments involved in Fig. 3, and will not be repeated here.

Step 4104: if the first indication information indicates that the transmitting terminal supports out-of-order delivery of data frames, and the second indication information indicates that the receiving terminal supports out-of-order delivery of data frames, receiving the first data frame. The first data frame includes third indication information, and the third indication information indicates the range of packet number PN values of the first data frame.

For example, the third indication information is carried in the MAC header of the first data frame.

For example, the PN value corresponds to a preset traffic identifier TID.

Example implementations of step 4104 may be found with reference to the example implementations of step 205 in Fig. 2, the example implementations of steps 304 and 305 in Fig. 3, the embodiments involved in Fig. 2, and other related parts in the embodiments involved in Fig. 3, which will not be repeated here.

Step 4105: based on the range of PN values indicated by the third indication information in the first data frame, the initial PN value of the first data frame, and the PN value of the first data frame, determining whether the transmission of the first data frame is a valid out-of-order delivery.

If the difference between the PN value of the first data frame and the initial PN value is less than or equal to the range of PN values, and the PN value of the first data frame is not progressively increasing relative to the initial PN value, the receiving terminal determines that the transmission of the first data frame is a valid out-of-order delivery.

Example implementations of step 4105 may be found with reference to the example implementations of steps 207 and 207a in Fig. 2, and other related parts in the embodiments involved in Fig. 2, which will not be repeated here.

The communication method involved in the embodiments of the present disclosure may include the foregoing steps and at least one of the embodiments. For example, step 4101 may be implemented as a separate embodiment, step 4102 may be implemented as a separate embodiment, step 4104 may be implemented as a separate embodiment, and step 4105 may be implemented as a separate embodiment. The combination of steps 4102 and 4103 may be implemented as a separate embodiment, the combination of steps 4101, 4102, and 4103 may be implemented as a separate embodiment, and the combination of steps 4104 and 4105 may be implemented as a standalone embodiment, but are not limited thereto.

In some embodiments, references may be made to other example implementations recited before or after the description corresponding to Fig. 4A.

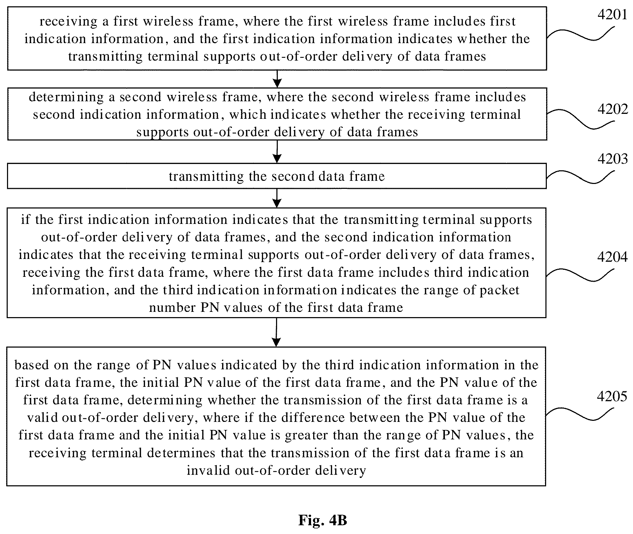

Fig. 4B is another flowchart schematic diagram of a communication method according to an embodiment of the present disclosure.

As shown in Fig. 4B, the above method may be applied to a communication device, which is a receiving terminal. The above method includes steps 4201, 4202, 4203, 4204, and 4205.

Step 4201, receiving a first wireless frame. The first wireless frame includes first indication information, and the first indication information indicates whether the transmitting terminal supports out-of-order delivery of data frames.

For example, the first wireless frame includes at least one of: a probe request frame, an association request frame, or a reassociation request frame.

For example, the first indication information is carried in the MAC capabilities field of the UHR capabilities information element of the first wireless frame.

For example, the first indication information is set to a first parameter value, indicating that the transmitting terminal supports out-of-order delivery of data frames.

Example implementations of step 4201 may be found with reference to the example implementations of steps 201 and 202 in Fig. 2, the example implementations of steps 301 and 302 in Fig. 3, the embodiments involved in Fig. 2, and other related parts in the embodiments involved in Fig. 3, which will not be repeated here.

Step 4202: determining a second wireless frame. The second wireless frame includes second indication information, which indicates whether the receiving terminal supports out-of-order delivery of data frames.

For example, the second wireless frame includes at least one of: a beacon frame, a probe response frame, an association response frame, or a reassociation response frame.

For example, the second indication information is carried in the MAC capabilities field of the UHR capabilities information element of the second wireless frame.

For example, the second indication information is set to a second parameter value, indicating that the receiving terminal supports out-of-order delivery of data frames.

Example implementations of step 4202 may be found with reference to the example implementations of step 203 in Fig. 2 and other related parts in the embodiments involved in Fig. 2, which will not be repeated here.

Step 4203: transmitting the second data frame.

Example implementations of step 4203 may be found with reference to the example implementations of step 204 in Fig. 2, the example implementations of step 303 in Fig. 3, the embodiments involved in Fig. 2, and other related parts in the embodiments involved in Fig. 3, which will not be repeated here.

Step 4204: if the first indication information indicates that the transmitting terminal supports out-of-order delivery of data frames, and the second indication information indicates that the receiving terminal supports out-of-order delivery of data frames, receiving the first data frame. The first data frame includes third indication information, and the third indication information indicates the range of packet number PN values of the first data frame.

For example, the third indication information is carried in the MAC header of the first data frame.

For example, the PN value corresponds to a preset traffic identifier (TID).

Example implementations of step 4204 may be found with reference to the example implementations of step 205 in Fig. 2, the example implementations of steps 304 and 305 in Fig. 3, the embodiments involved in Fig. 2, and other related parts in the embodiments involved in Fig. 3. These will not be repeated here.

Step 4205: based on the range of PN values indicated by the third indication information in the first data frame, the initial PN value of the first data frame, and the PN value of the first data frame, determining whether the transmission of the first data frame is a valid out-of-order delivery.

If the difference between the PN value of the first data frame and the initial PN value is greater than the range of PN values, the receiving terminal determines that the transmission of the first data frame is an invalid out-of-order delivery.

Example implementations of step 4205 may be found with reference to the example implementations of steps 207 and 207b in Fig. 2, and other related parts in the embodiments involved in Fig. 2. These will not be repeated here.

The communication method involved in the embodiments of the present disclosure may include the foregoing steps and at least one of the embodiments. For example, step 4201 may be implemented as a separate embodiment, step 4202 may be implemented as a separate embodiment, step 4204 may be implemented as a separate embodiment, and step 4205 may be implemented as a separate embodiment. The combination of steps 4202 and 4203 may be implemented as a separate embodiment, the combination of steps 4201, 4202, and 4203 may be implemented as a separate embodiment, and the combination of steps 4204 and 4205 may be implemented as a separate embodiment, but is not limited thereto.

In some embodiments, references may be made to other example implementations recited before or after the description corresponding to Fig. 4B.

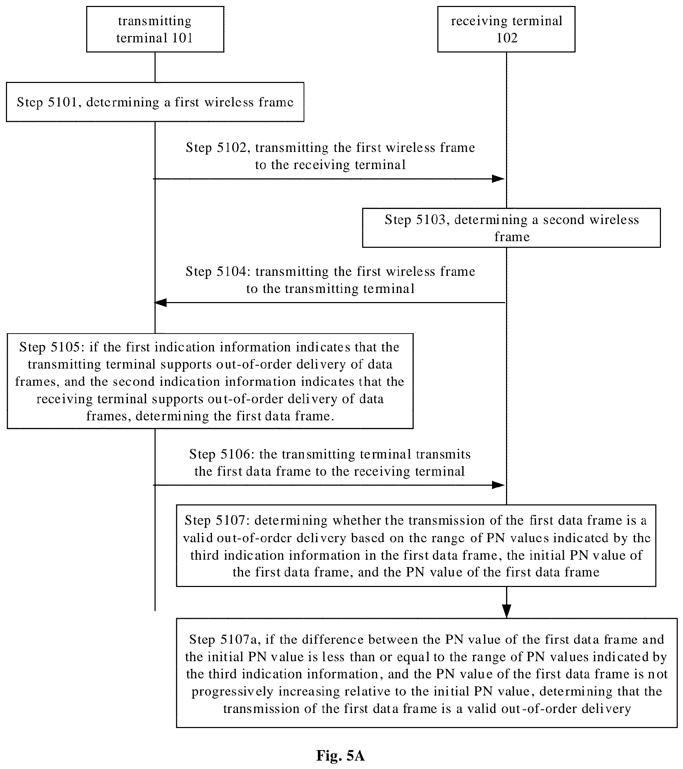

Fig. 5A is an interactive schematic diagram of a communication method according to an embodiment of the present disclosure. As shown in Fig. 5A, the above method includes steps 5101, 5102, 5103, 5104, 5105, 5106, and 5107.

Step 5101, the transmitting terminal determines a first wireless frame. The first wireless frame includes first indication information, and the first indication information indicates whether the transmitting terminal supports out-of-order delivery of data frames.

For example, the first wireless frame includes at least one of: a probe request frame, an association request frame, or a reassociation request frame.

For example, the first indication information is carried in the Media Access Control (MAC) capabilities field of the UHR capabilities information element of the first wireless frame.

For example, the first indication information is set to a first parameter value, indicating that the transmitting terminal supports out-of-order delivery of data frames.

Example implementations of step 5101 may be found with reference to the example implementations of step 201 in Fig. 2 and other related parts in the embodiments involved in Fig. 2, and will not be repeated here.

Step 5102, the transmitting terminal transmits the first wireless frame to the receiving terminal.

Example implementations of step 5102 may be found with reference to the example implementations of step 202 in Fig. 2 and other related parts in the embodiments involved in Fig. 2, and will not be repeated here.

Step 5103, the receiving terminal determines a second wireless frame. The second wireless frame includes second indication information, and the second indication information indicates whether the receiving terminal supports out-of-order delivery of data frames.

For example, the second wireless frame includes at least one of: a beacon frame, a probe response frame, an association response frame, or a reassociation response frame.

For example, the second indication information is carried in the MAC capabilities field of the UHR capabilities information element of the first wireless frame.

For example, the second indication information is set to a second parameter value, indicating that the receiving terminal supports out-of-order delivery of data frames.

Example implementations of step 5103 may be found with reference to the example implementations of step 203 in Fig. 2 and other related parts in the embodiments involved in Fig. 2, and will not be repeated here.

Step 5104: the receiving terminal transmits the second wireless frame to the transmitting terminal.

Example implementations of step 5104 may be found with reference to the example implementations of step 204 in Fig. 2, the example implementations of step 303 in Fig. 3, the embodiments involved in Fig. 2, and other related parts in the embodiments involved in Fig. 3, and will not be repeated here.

Step 5105: if the first indication information indicates that the transmitting terminal supports out-of-order delivery of data frames, and the second indication information indicates that the receiving terminal supports out-of-order delivery of data frames, the transmitting terminal determines the first data frame. The first data frame includes third indication information, and the third indication information indicates the range of packet number (PN) values of the first data frame.

For example, the third indication information is carried in the MAC header of the first data frame.

For example, the PN value corresponds to a preset traffic identifier (TID).

Example implementations of step 5105 may be found with reference to the example implementations of step 205 in Fig. 2 and other related parts in the embodiments involved in Fig. 2, and will not be repeated here.

Step 5106: the transmitting terminal transmits the first data frame to the receiving terminal.

Example implementations of step 5106 may be found with reference to the example implementation of step 206 in Fig. 2 and other related parts in the embodiments involved in Fig. 2, and will not be repeated here.

Step 5107: the receiving terminal determines whether the transmission of the first data frame is a valid out-of-order delivery based on the range of PN values indicated by the third indication information in the first data frame, the initial PN value of the first data frame, and the PN value of the first data frame.

Example implementations of step 5107 may be found with reference to the example implementations of step 207 in Fig. 2 and other related parts of the embodiments involved in Fig. 2, which will not be repeated here.

Specifically, in step 5107a, if the difference between the PN value of the first data frame and the initial PN value is less than or equal to the range of PN values indicated by the third indication information, and the PN value of the first data frame is not progressively increasing relative to the initial PN value, the receiving terminal determines that the transmission of the first data frame is a valid out-of-order delivery.

Example implementations of step 5107a may be found with reference to the example implementations of step 207b in Fig. 2 and other related parts of the embodiments involved in Fig. 2, which will not be repeated here.

It should be noted that step 5107a is subordinate to step 5107.

When the difference between the PN value of the first data frame and the initial PN value is greater than the range of PN values indicated by the third indication information, the receiving terminal determines that the transmission of the first data frame is an invalid out-of-order delivery.

The communication method involved in the embodiments of the present disclosure may include the foregoing steps and at least one of the embodiments. For example, step 5102 may be implemented as a separate embodiment, step 5103 may be implemented as a separate embodiment, step 5105 may be implemented as a separate embodiment, and step 5107 may be implemented as a separate embodiment. The combination of steps 5101 and 5102 may be implemented as a separate embodiment, the combination of steps 5103 and 5104 may be implemented as a separate embodiment, the combination of steps 5105 and 5106 may be implemented as a separate embodiment, the combination of steps 5101, 5102, 5103, and 5104 may be implemented as a separate embodiment, and the combination of steps 5105, 5106, and 5107 may be implemented as a separate embodiment, but is not limited thereto.

The embodiments of the present disclosure do not restrict the execution order of the combined step of steps 5101 and 5102, and the combined step of steps 5103 and 5104. The combined step of steps 5101 and 5102 may be executed first by the transmitting terminal, and then the combined step of steps 5103 and 5104 may be executed by the receiving terminal. Alternatively, the combined step of steps 5103 and 5104 may be executed first by the receiving terminal, and then the combined step of steps 5101 and 5102 may be executed by the transmitting terminal.

In some embodiments, references may be made to other example implementations recited before or after the description corresponding to Fig. 5A.

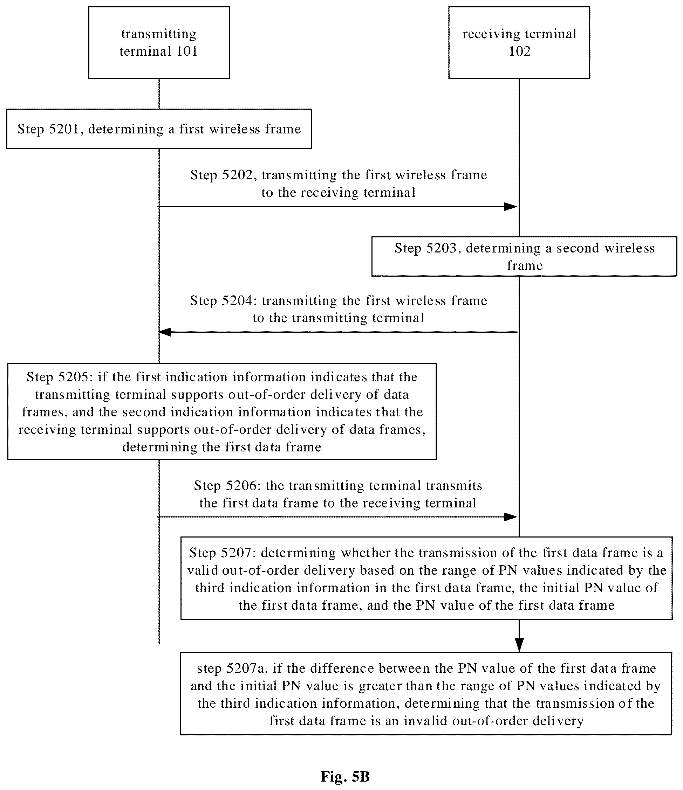

Fig. 5B is an interactive schematic diagram of a communication method according to an embodiment of the present disclosure. As shown in Fig. 5B, the method includes steps 5201, 5202, 5203, 5204, 5205, 5206, and 5207.

Step 5201, the transmitting terminal determines a first wireless frame. The first wireless frame includes first indication information, and the first indication information indicates whether the transmitting terminal supports out-of-order delivery of data frames.

For example, the first wireless frame includes at least one of: a probe request frame, an association request frame, or a reassociation request frame.

For example, the first indication information is carried in the Media Access Control (MAC) capabilities field of the UHR capabilities information element of the first wireless frame.

For example, the first indication information is set to a first parameter value, indicating that the transmitting terminal supports out-of-order delivery of data frames.

Example implementations of step 5201 may be found with reference to the example implementations of step 201 in Fig. 2 and other related parts in the embodiments involved in Fig. 2, and will not be repeated here.

Step 5202, the transmitting terminal transmits the first wireless frame to the receiving terminal.

Example implementations of step 5202 may be found with reference to the example implementations of step 202 in Fig. 2 and other related parts in the embodiments involved in Fig. 2, and will not be repeated here.

Step 5203, the receiving terminal determines a second wireless frame. The second wireless frame includes second indication information, and the second indication information indicates whether the receiving terminal supports out-of-order delivery of data frames.

For example, the second wireless frame includes at least one of: a beacon frame, a probe response frame, an association response frame, or a reassociation response frame.

For example, the second indication information is carried in the MAC capabilities field of the UHR capabilities information element of the first wireless frame.

For example, the second indication information is set to a second parameter value, indicating that the receiving terminal supports out-of-order delivery of data frames.

Example implementations of step 5203 may be found with reference to the example implementations of step 203 in Fig. 2 and other related parts in the embodiments involved in Fig. 2, and will not be repeated here.

Step 5204: the receiving terminal transmits the second wireless frame to the transmitting terminal.

Example implementations of step 5204 may be found with reference to the example implementations of step 204 in Fig. 2, the example implementations of step 303 in Fig. 3, the embodiments involved in Fig. 2, and other related parts in the embodiments involved in Fig. 3, and will not be repeated here.

Step 5205: if the first indication information indicates that the transmitting terminal supports out-of-order delivery of data frames, and the second indication information indicates that the receiving terminal supports out-of-order delivery of data frames, the transmitting terminal determines the first data frame. The first data frame includes third indication information, and the third indication information indicates the range of packet number (PN) values of the first data frame.

For example, the third indication information is carried in the MAC header of the first data frame.

For example, the PN value corresponds to a preset traffic identifier (TID).

Example implementations of step 5205 may be found with reference to the example implementations of step 205 in Fig. 2 and other related parts in the embodiments involved in Fig. 2, and will not be repeated here.

Step 5206: the transmitting terminal transmits the first data frame to the receiving terminal.

Example implementations of step 5206 may be found with reference to the example implementations of step 206 in Fig. 2 and other related parts in the embodiments involved in Fig. 2, and will not be repeated here.

Step 5207: the receiving terminal determines whether the transmission of the first data frame is a valid out-of-order delivery based on the range of PN values indicated by the third indication information in the first data frame, the initial PN value of the first data frame, and the PN value of the first data frame.

Example implementations of step 5207 may be found with reference to the example implementations of step 207 in Fig. 2 and other related parts of the embodiments involved in Fig. 2, which will not be repeated here.

Specifically, in step 5207a, if the difference between the PN value of the first data frame and the initial PN value is greater than the range of PN values indicated by the third indication information, the receiving terminal determines that the transmission of the first data frame is an invalid out-of-order delivery.

Example implementations of step 5207a may be found with reference to the example implementations of step 207a in Fig. 2 and other related parts of the embodiments involved in Fig. 2, which will not be repeated here.

It should be noted that step 5207a is subordinate to step 5207.

The communication method involved in the embodiments of the present disclosure may include the foregoing steps and at least one of the embodiments. For example, step 5202 may be implemented as a separate embodiment, step 5203 may be implemented as a separate embodiment, step 5205 may be implemented as a separate embodiment, and step 5207 may be implemented as a separate embodiment. The combination of steps 5201 and 5202 may be implemented as a separate embodiment, the combination of steps 5203 and 5204 may be implemented as a separate embodiment, the combination of steps 5205 and 5206 may be implemented as a separate embodiment, the combination of steps 5201, 5202, 5203, and 5204 may be implemented as a separate embodiment, and the combination of steps 5205, 5206, and 5207 may be implemented as a separate embodiment, but is not limited thereto.

The embodiments of the present disclosure do not restrict the execution order of the combined step of steps 5201 and 5202, and the combined step of steps 5203 and 5204. The combined step of steps 5201 and 5202 may be executed first by the transmitting terminal, and then the combined step of steps 5203 and 5204 may be executed by the receiving terminal. Alternatively, the combined step of steps 5203 and 5204 may be executed first by the receiving terminal, and then the combined step of steps 5201 and 5202 may be executed by the transmitting terminal.

In some embodiments, references may be made to other example implementations recited before or after the description corresponding to Fig. 5B.

The embodiments of the present disclosure also provide a device for implementing any of the above methods. For example, a device is provided that includes units or modules for implementing the steps executed by the terminal in any of the above methods. Furthermore, another device is provided that includes units or modules for implementing the steps executed by the network device (e.g., access network device, core network functional node, core network device, etc.) in any of the above methods.

It should be understood that the division of units or modules in the above device is only a logical functional division. In actual implementations, they may be fully or partially integrated into a single physical entity, or they may be physically separated. Furthermore, the units or modules in the device may be implemented by a processor calling software. For example, the device includes a processor connected to a memory having instructions stored therein. The processor calls the instructions stored in the memory to implement any of the above methods or to implement the functions of the units or modules in the above device. The processor may be, for example, a general-purpose processor, such as a Central Processing Unit (CPU) or a microprocessor, and the memory may be internal or external to the device. Alternatively, the units or modules in the device may be implemented in the form of hardware circuits. The functionality of some or all of the units or modules may be achieved through the design of hardware circuits, which may be understood as one or more processors. For example, in an implementation, the hardware circuit is an application-specific integrated circuit (ASIC). The functionality of some or all of the units or modules is achieved through the design of the logical relationships between the components within the circuit. In another implementation, for example, the hardware circuit may be implemented using a programmable logic device (PLD). Taking a field programmable gate array (FPGA) as an example, it may include a large number of logic gates. The connection relationships between the logic gate circuits are configured through configuration files, thereby achieving the functionality of some or all of the units or modules. All the units or modules of the above device may be implemented entirely through processor-called software, entirely through hardware circuits, or partially through processor-called software with the remaining parts implemented through hardware circuits.

In the embodiments of the present disclosure, the processor is a circuit with signal processing capabilities. In an implementation, the processor may be a circuit with instruction read and execute capabilities, such as a Central Processing Unit (CPU), a microprocessor, a graphics processing unit (GPU) (which may be understood as a microprocessor), or a digital signal processor (DSP). In another implementation, the processor may implement certain functions through the logical relationships among hardware circuits. The logical relationships among the aforementioned hardware circuits are fixed or reconfigurable. For example, the processor is a hardware circuit implemented using an application-specific integrated circuit (ASIC) or a programmable logic device (PLD), such as FPGA. In a reconfigurable hardware circuit, the process, in which the processor loads a configuration document and configures the hardware circuit, may be understood as the process in which the processor loads instructions to implement the functions of some or all of the above units or modules. Furthermore, it may also be a hardware circuit designed for artificial intelligence, which may be understood as ASIC, such as a Neural Network Processing Unit (NPU), a Tensor Processing Unit (TPU), or a Deep Learning Processing Unit (DPU).

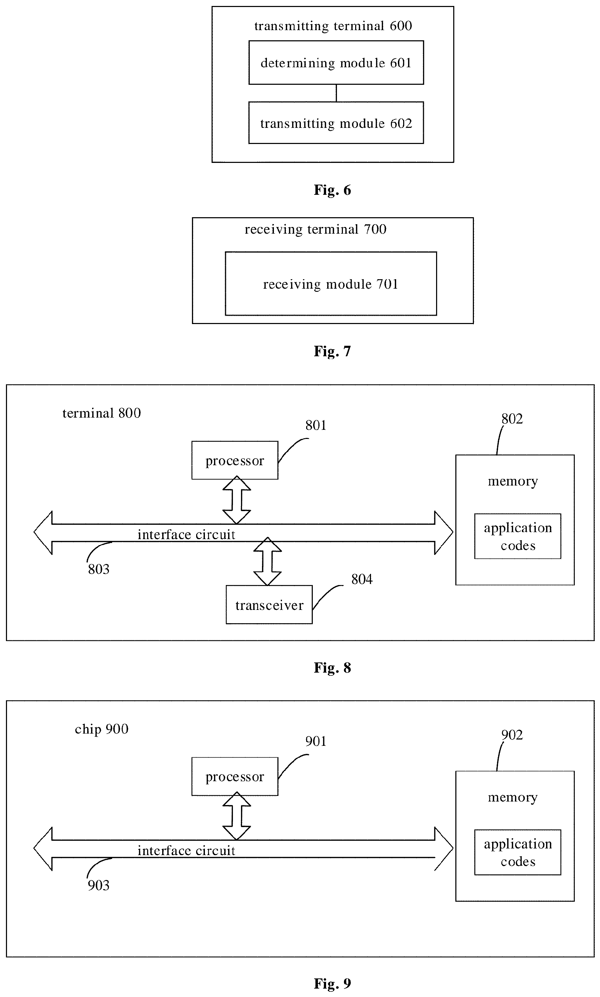

Fig. 6 is a structural schematic diagram of a communication device provided in an embodiment of the present disclosure. As shown in Fig. 6, the communication device 600 is a first communication device, which may be a transmitting terminal, including at least one of a determining module 601 and a transmitting module 602.

In some embodiments, the determining module 601 is configured to determine a first wireless frame. The first wireless frame includes first indication information, and the first indication information indicates whether the transmitting terminal supports out-of-order delivery of data frames. The transmitting module 602 is configured to transmit the first data frame to the receiving terminal.

For example, the determining module 601 is configured to perform at least one of the communication steps performed by the transmitting terminal 101 in any of the above methods (e.g., steps 201, 205, 301, 304, 501, 505, but not limited thereto), which will not be elaborated here. The transmitting module 602 is configured to perform steps 202, 204, 206, 302, 303, 305, 401, 403, 404, 502, 504, and 506.

Fig. 7 is a structural schematic diagram of a communication device provided in an embodiment of the present disclosure. As shown in Fig. 7, the communication device 700 is a second communication device, which may be a receiving terminal, and may include a receiving module 701.

In some embodiments, the receiving module 701 is configured to receive a first wireless frame sent by the transmitting terminal. The first wireless frame includes first indication information, and the first indication information indicates whether the transmitting terminal supports out-of-order delivery of data frames.

For example, the receiving module 701 is configured to perform at least one of the communication steps (e.g., steps 202, 204, 206, 302, 303, 305, 401, 403, 404, 502, 504, and 506) executed by the second B device 102 in any of the above methods, which will not be elaborated further here.

In some embodiments, the transceiving module may include a transmitting module and/or a receiving module, which may be separate from each other or integrated together. For example, the transceiving module may be interchangeable with a transceiver.

Fig. 8 is a structural schematic diagram of a terminal 800 (e.g., a user equipment) provided in an embodiment of the present disclosure. The terminal 800 may be a chip, chip system, or processor that supports a network device in implementing any of the above methods, or it may be a chip, chip system, or processor that supports a terminal in implementing any of the above methods. The terminal 800 may be used to implement the methods described in the above method embodiments, and specific details may be found in the descriptions in the above method embodiments.

As shown in Fig. 8, the terminal 800 includes one or more processors 801. The processor 801 may be a general-purpose processor or a dedicated processor, such as a baseband processor or a central processing unit (CPU). The baseband processor may be used to process communication protocols and communication data, while the CPU may be used to control the communication device (e.g., base station, baseband chip, terminal device, terminal device chip, DU, or CU, etc.), execute programs, and process program data. The terminal 800 is configured to perform any of the above methods.

In some embodiments, the terminal 800 further includes one or more memories 802 for storing instructions. For example, all or some of the memories 802 may be located outside the terminal 800.

In some embodiments, the terminal 800 further includes one or more transceivers 804. When the terminal 800 includes one or more transceivers 804, the transceiver 804 performs at least one of the communication steps such as transmitting and/or receiving in the above methods (e.g., steps 202, 204, 206, 302, 303, 305, 401, 403, 404, 502, 504, 506, but not limited thereto), and the processor 801 performs at least one of other steps (e.g., steps 201, 203, 205, 207, 301, 304, 402, 405, 501, 503, 505, 507, but not limited thereto).

In some embodiments, the transceiver may include a receiver and/or a transmitter, which may be separate from each other or integrated together. For example, terms such as transceiver, transceiving unit, transceiving machine, and transceiving circuit may be used interchangeably. Terms such as transmitter, transmitting unit, transmitting machine, and transmitting circuit may be used interchangeably. Terms such as receiver, receiving unit, receiving machine, and receiving circuit may be used interchangeably.

In some embodiments, the terminal 800 may include one or more interface circuits 803. For example, the interface circuit 803 is connected to the memory 802, and the interface circuit 803 may be used to receive signals from the memory 802 or other devices, and may be used to send signals to the memory 802 or other devices. For example, the interface circuit 803 may read instructions stored in the memory 802 and send the instructions to the processor 801.

The terminal 800 described in the above embodiments may be a communication device such as a user equipment, but the scope of the terminal 800 described in the present disclosure is not limited thereto, and the structure of the terminal 800 may not be limited to Fig. 8. The communication device may be a separate device or may be part of a larger device. For example, the communication device may be: (1) a separate integrated circuit (IC), or chip, or chip system or subsystem; (2) a collection of one or more ICs, for exmaple including storage components for storing data and programs; (3) an ASIC, such as a modem; (4) a module that may be embedded in other devices; (5) a receiver, terminal device, smart terminal device, cellular phone, wireless device, handheld device, mobile unit, vehicle-mounted device, network device, cloud device, artificial intelligence device, etc.; (6) others, etc.

Fig. 9 is a structural schematic diagram of a chip 900 according to an embodiment of the present disclosure. For cases where the terminal 800 may be a chip or chip system, references may be made to the structural schematic diagram of the chip 900 shown in Fig. 9, but it is not limited thereto.

The chip 900 includes one or more processors 901, and the chip 900 is configured to perform any of the above methods.

In some embodiments, the chip 900 further includes one or more interface circuits 903. For example, the interface circuit 903 is connected to the memory 902. The interface circuit 903 may be used to receive signals from the memory 902 or other devices, and the interface circuit 903 may also be used to send signals to the memory 902 or other devices. For example, the interface circuit 903 may read instructions stored in the memory 902 and send these instructions to the processor 901.

In some embodiments, the interface circuit 903 performs at least one of the communication steps such as sending and/or receiving in the above methods (e.g., steps 202, 204, 206, 302, 303, 305, 401, 403, 404, 502, 504, 506, but not limited thereto), and the processor 901 performs at least one of other steps (e.g., steps 201, 203, 205, 207, 301, 304, 402, 405, 501, 503, 505, 507, but not limited thereto).

In some embodiments, terms such as interface circuit, interface, transceiving pin, and transceiver may be used interchangeably.

In some embodiments, the chip 900 further includes one or more memories 902 for storing instructions. For example, all or some of the memories 902 may be located outside the chip 900.

The present disclosure also provides a storage medium storing instructions. When the instructions are executed on the terminal 800, the terminal 800 is caused to perform any of the above methods. For example, the storage medium is an electronic storage medium. For example, the storage medium is a computer-readable storage medium, but is not limited thereto. The storage medium may also be a storage medium readable by other devices. For example, the storage medium may be a non-transitory storage medium, but is not limited thereto. The storage medium may also be a temporary storage medium.

The present disclosure also provides a program product. When the program product is executed by the terminal 800, the terminal 800 is caused to perform any of the above methods. For example, the program product is a computer program product.

The present disclosure also provides a computer program. When the computer program is executed on a computer, the computer is caused to perform any of the above methods.

## Claims

1. A communication method, comprising:
determining, by a transmitting terminal, a first wireless frame, wherein the first wireless frame comprises first indication information, and the first indication information indicates whether the transmitting terminal supports out-of-order delivery of data frames; and
transmitting the first wireless frame.

2. The communication method according to claim 1, wherein:
the first indication information is carried in a Media Access Control (MAC) capabilities field of an Ultra High Reliability (UHR) capabilities information element of the first wireless frame.

3. The communication method according to claim 1 or 2, wherein:
the first indication information is set to a first parameter value, indicating that the transmitting terminal supports the out-of-order delivery of the data frames.

4. The communication method according to claim 1, further comprising:
receiving a second wireless frame, wherein the second wireless frame comprises second indication information, and the second indication information indicates whether a receiving terminal supports the out-of-order delivery of the data frames.

5. The communication method according to claim 4, wherein:
the second indication information is carried in an MAC capabilities field of a UHR capabilities information element of the second wireless frame.

6. The communication method according to claim 4 or 5, wherein the second indication information is set to a second parameter value, indicating that the receiving terminal supports the out-of-order delivery of the data frames.

7. The communication method according to claim 4, wherein:
the first indication information indicates that the transmitting terminal supports the out-of-order delivery of the data frames, and the second indication information indicates that the receiving terminal supports the out-of-order delivery of the data frames; and
the method further comprises:
determining a first data frame, wherein the first data frame comprises third indication information, and the third indication information indicates a range of Packet Number (PN) values of the first data frame; and
transmitting the first data frame.

8. The communication method according to claim 7, wherein the third indication information is carried in an MAC header of the first data frame.

9. The communication method according to claim 7, wherein the PN value corresponds to a preset Traffic Identifier (TID).

10. The communication method according to claim 4, wherein:
the first wireless frame comprises at least one of: a probe request frame, an association request frame, or a reassociation request frame;
the second wireless frame comprises at least one of: a beacon frame, a probe response frame, an association response frame, or a reassociation response frame.

11. A communication method, comprising:
receiving, by a receiving terminal, a first wireless frame, wherein the first wireless frame comprises first indication information, and the first indication information indicates whether a transmitting terminal supports out-of-order delivery of data frames.

12. The communication method according to claim 11, wherein:
the first indication information is carried in an MAC capabilities field of a UHR capabilities information element of the first wireless frame.

13. The communication method according to claim 11 or 12, wherein:
the first indication information is set to a first parameter value, indicating that the transmitting terminal supports the out-of-order delivery of the data frames.

14. The communication method according to claim 11, further comprising:
determining a second wireless frame, wherein the second wireless frame comprises second indication information, and the second indication information indicates whether a receiving terminal supports the out-of-order delivery of the data frames; and
transmitting the second wireless frame.

15. The communication method according to claim 14, wherein:
the second indication information is carried in an MAC capabilities field of a UHR capabilities information element of the second wireless frame.

16. The communication method according to claim 14 or 15, wherein the second indication information is set to a second parameter value, indicating that the receiving terminal supports the out-of-order delivery of the data frames.

17. The communication method according to claim 14, wherein
the first indication information indicates that the transmitting terminal supports the out-of-order delivery of the data frames, and the second indication information indicates that the receiving terminal supports the out-of-order delivery of the data frames; and
the method further comprises:
receiving a first data frame, wherein the first data frame comprises third indication information, and the third indication information indicates a range of Packet Number (PN) values of the first data frame; and
determining whether transmission of the first data frame is a valid out-of-order delivery based on the range of PN values, an initial PN value of the first data frame, and the PN value of the first data frame.

18. The communication method according to claim 17, wherein determining whether the transmission of the first data frame is the valid out-of-order delivery comprises:
in response to a difference between the PN value and the initial PN value being less than or equal to the range of PN values, and the PN value being not progressively increasing relative to the initial PN value, determining that the transmission of the first data frame is the valid out-of-order delivery;
in response to the difference between the PN value and the initial PN value being greater than the range of PN values, determining that the transmission of the first data frame is an invalid out-of-order delivery.

19. The communication method according to claim 17, wherein the third indication information is carried in an MAC header of the first data frame.

20. The communication method according to claim 17, wherein the PN value corresponds to a preset Traffic Identifier (TID).

21. The communication method according to claim 14, wherein:
the first wireless frame comprises at least one of: a probe request frame, an association request frame, or a reassociation request frame;
the second wireless frame comprises at least one of: a beacon frame, a probe response frame, an association response frame, or a reassociation response frame.

22. A communication device, wherein the communication device is a transmitting terminal and comprises:
a determining module, configured to determine a first wireless frame, wherein the first wireless frame comprises first indication information, and the first indication information indicates whether the transmitting terminal supports out-of-order delivery of data frames; and
a transmitting module, configured to transmit the first wireless frame.

23. A communication device, wherein the communication device is a receiving terminal and comprises:
a receiving module, configured to receive a first wireless frame, wherein the first wireless frame comprises first indication information, and the first indication information indicates whether a transmitting terminal supports out-of-order delivery of data frames.

24. A communication device, wherein the communication device is a transmitting terminal and comprises:
one or more processors, wherein the transmitting terminal communication device is configured to perform the communication method according to any one of claims 1 to 10.

25. A communication device, wherein the communication device is a receiving terminal and comprises:
one or more processors, wherein the receiving terminal communication device is configured to perform the communication method according to any one of claims 11 to 21.

26. A communication system, comprising a first communication device and a second communication device, wherein
the first communication device is a transmitting terminal and the second communication device is a receiving terminal;
the first communication device is configured to implement the communication method according to any one of claims 1 to 11; and
the second communication device is configured to implement the communication method according to any one of claims 12 to 21.

27. A storage medium having instructions stored therein, wherein:
when the instructions are executed on a communication device, the communication device is caused to perform the communication method according to any one of claims 1 to 11, or to perform the communication method according to any one of claims 11 to 21.
